Europäisches Patentamt

European Patent Office

Office européen des brevets

(11) Publication number: **0 024 828**
**B1**

(12) **EUROPEAN PATENT SPECIFICATION**

(45) Date of publication of patent specification: **13.04.83**

(51) Int. Cl.³: **H 02 G 1/12**

(21) Application number: **80302628.5**

(22) Date of filing: **01.08.80**

(54) A slitting tool for separating the conductors of a multi-conductor flat, flexible, insulated cable.

(30) Priority: **30.08.79 US 71229**

(43) Date of publication of application:
**11.03.81 Bulletin 81/10**

(45) Publication of the grant of the patent:
**13.04.83 Bulletin 83/15**

(84) Designated Contracting States:
**AT BE CH DE FR GB IT LI NL SE**

(56) References cited:
**FR - A - 1 323 905**
**GB - A - 1 209 311**
**US - A - 3 279 058**
**US - A - 3 543 616**

(73) Proprietor: **AMP INCORPORATED**
**Eisenhower Boulevard**
**Harrisburg Pennsylvania (US)**

(72) Inventor: **Frantz, Robert Houston**
**R.D. No.1, Box 294L**
**Newville Pennsylvania 17241 (US)**

(74) Representative: **Terrell, Thomas Gwyn et al,**
**20 Queensmere**
**Slough Berkshire SL1 1YZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

A slitting tool for separating the conductors of a multi-conductor flat, flexible, insulated cable

There is disclosed in United States Patent Specification No. 3,543,616, a slitting tool for separating the conductors of a multi-conductor, flat, flexible, insulated cable into individual conductors or groups of conductors, the tool comprising a cutting base surface for receiving the cable, a cable cutter assembly having cable insulation slitting blades spaced from one another transversely of the slitting direction, and means for moving the cutter assembly relatively to the cutting base surface between an open position to permit the insertion of the cable there between to an extent limited by a stop and a closed position to engage the slitting blades in the insulation of the cable when such is positioned between the base surface and the cutter assembly.

In this known tool, which is of the pliers type, the cutting base surface, which is constituted by the surface of a roller, and the cutter assembly are each mounted upon one of a pair of pivotally connected jaws and the tool is operated by closing the jaws about the cable and relatively moving the tool and the cable away from one another. The slitting blades are arranged in a single row. Since the cable must be pulled between the cutter assembly and the roller it is necessary when using the tool, to ensure that the cable is not pulled at an angle to the intended slitting direction, if inaccurate slitting of the cable and possible damage to the conductors, is to be avoided. The known tool is capable of slitting the cable in accordance with a single pattern in which the slits are all of the same length.

The present invention is directed to the provision of a cable slitting tool as defined in the first paragraph of this specification but in which little or no skill on the part of the operator is needed accurately to slit the cable, and in which the tool can readily be adapted to produce different complex slitting patterns in which the slits made in the cable are not all of the same length. These improvements are of particular importance in the mass production of electrical harnesses from multi-conductor flat, flexible, insulated cable, which harnesses are to comprise leads of different lengths.

According to the present invention, therefore, a tool as defined in the first paragraph of this specification is characterised in that the base surface, which is elongate, in the direction of the cable to be received thereon, is provided at one end with the stop adjacent to which is a clamp for securing the cable against the base surface, the cutter assembly comprising a slide block mounted for movement longitudinally of the base surface and carrying a module; and in that the slitting blades, which are carried in the module which is exchangeably secured to the slide block, are mounted in spaced relationship both longitudinally and transversely of the base surface.

The wire clamp and the stop ensure that the cable is fixedly and accurately positioned with respect to the slitting blades.

For a better understanding of the invention, an embodiment thereof will now be described by way of example with reference to the accompanying drawings in which:—

Figure 1 is a perspective view of a slitting tool for separating the conductors of a multi-conductor flat, flexible, insulated cable, the tool being shown in a closed, operative position;

Figure 2 is an exploded perspective view of a cutter slide block of the tool;

Figure 3 is an enlarged view taken on the lines III—III of Figure 5;

Figure 4 is a side elevational view of the tool showing it in a partially open position;

Figure 5 is a view taken on the lines V—V of Figure 3; and

Figure 6 is a perspective view of a piece of multi-conductor, flat, flexible, insulated cable.

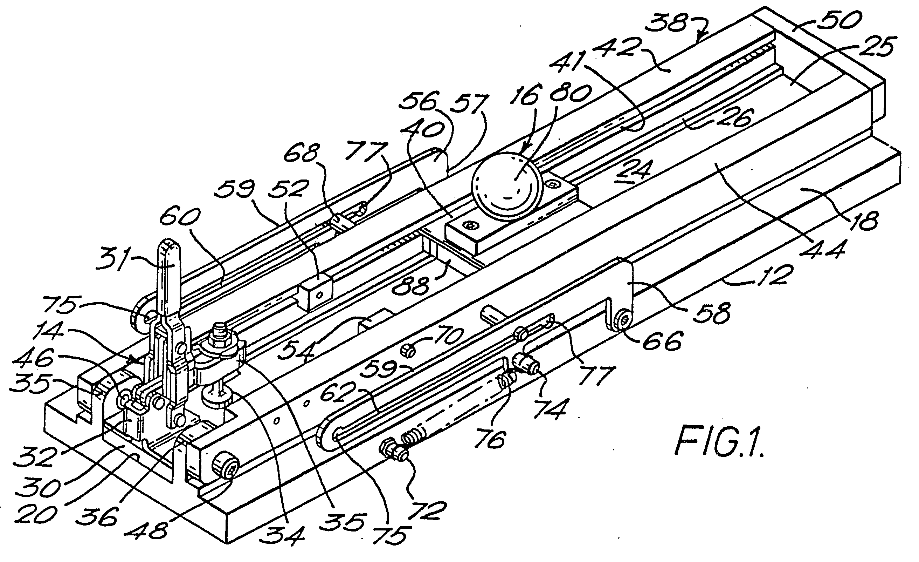

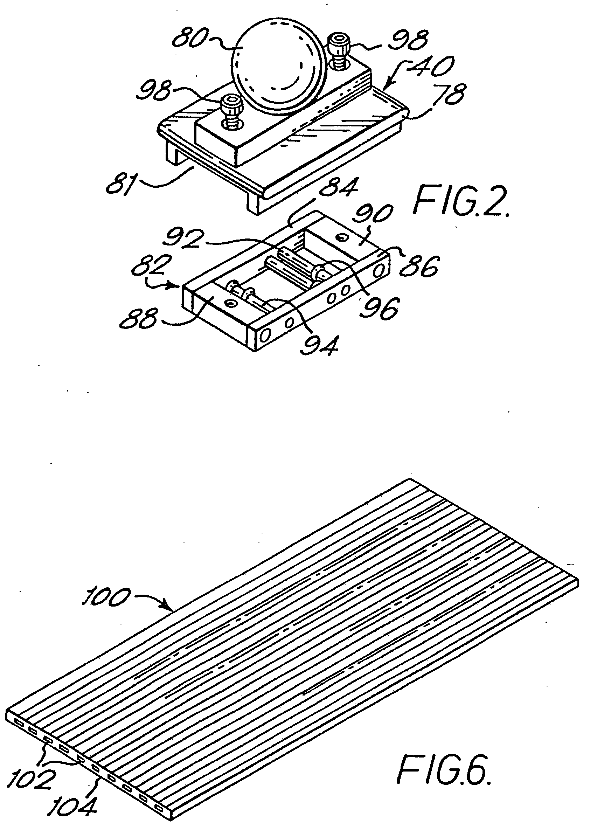

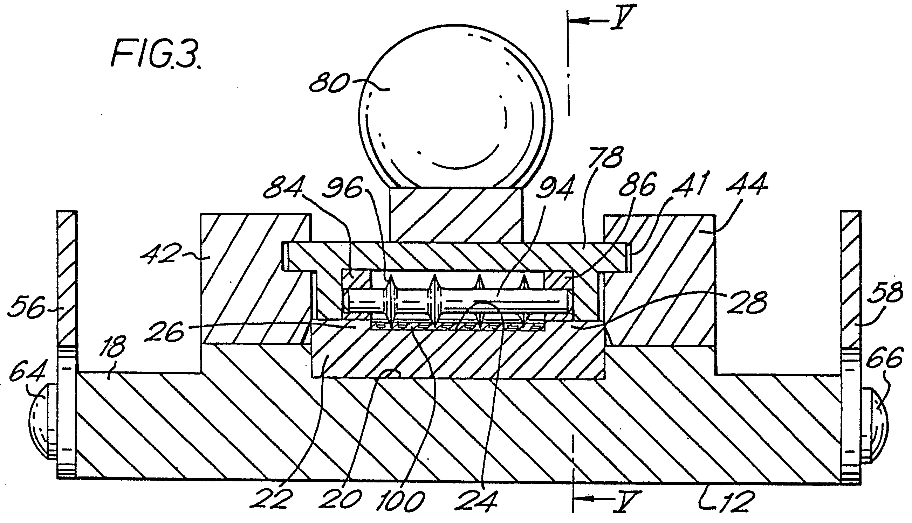

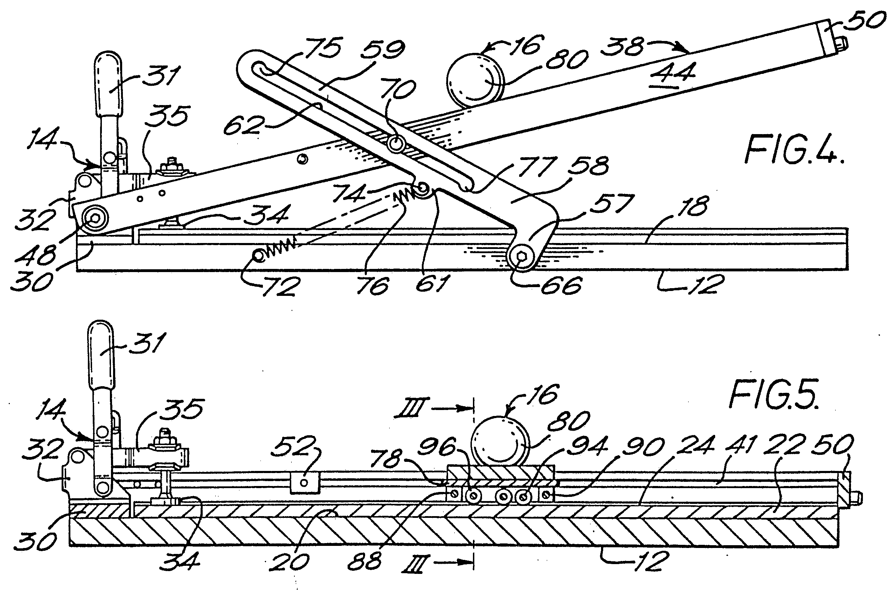

The tool comprises an elongate tool base 12, a cable clamp assembly 14 and a cutter assembly 16. The base 12 has an upper (as seen in Figures 1, 3 and 4) surface 18 formed with a central longitudinal channel 20, in which is a cutting block insert 22 having a hardened cutting base surface 24 defining a channel 25 in co-operation with side walls 26 and 28 of the insert 22.

The clamp assembly 14 is mounted on a base 30, which also acts as a cable stop, disposed at the left hand (as seen in Figures 1, 4 and 5) end of the base 12, opposite to the adjacent end of the insert 22 as shown in Figure 5. The assembly 14 comprises a lever mechanism 32 mounted on the base 30 and operated by an actuating handle 31 to raise and lower a cable clamping pad 34 on an arm 35, with respect to the surface 24. The mechanism 32, which is conventional, comprises a toggle linkage (not shown) connecting the handle 31 to the arm 35. The base 30 and the mechanism 32 are positioned between two pivot support members 35 and 36 upstanding from the base 12 and being formed integrally therewith, as best seen in Figure 1.

The cutter assembly 16 includes a cutter block frame 38 slidably supporting a cutter slide block 40 engaged in longitudinal grooves 41 in a pair of spaced parallel side rails 42 and 44 of the frame 38. The left hand (as seen in Figures 1, 4 and 5) end of the side rail 42 is connected to the support member 35 by means of a pivot pin 46, the left hand (as seen in Figures 1, 4 and 5) end of the side rail 44 being connected to the support member 36 by means of a pivot pin 48. The opposite ends of the rails 42 and 44 are rigidly connected by means of a rail cap 50. Stop blocks 52 and 54 secured to the inner sides of the rails 42 and 44, respectively, are adjustable in position longitudinally thereof to limit the movement of the slide block 40 in the direction of the assembly 14.

The frame 38 is further connected to the base 12 by means of hinge assemblies comprising F-shaped hinge members 56 and 58 the longer transverse arms 57 of which are secured to the base 12 by means of pivot pins 64 and 66, respectively. Longitudinal guide slots 60 and 62 formed in the longitudinal arms 59 of the members 56 and 58, respectively, slidably receive guide pins 68 and 70, respectively, fixed in the respective rails 42 and 44. The hinge assemblies further comprise pins 72 and 74 fixed respectively in the base 12 and in the shorter transverse arms 61 of the members 56 and 58 and supporting helical extension springs 76. The slots 60 and 62 terminate at their left hand (as seen in Figures 1 and 4) ends in offset detent portions 75 and at their other ends in oppositely offset detent portions 77.

The slide block 40, includes, as best seen in Figure 2, a cutter slide member 78 having a spherical handle 80 secured to its outer surface. The inner surface of the member 78 defines a channel 81 receiving a frame-like cutter module 82 comprising a pair of cutter support bars 84 and 86 retained in parallel spaced relationship by means of spacer blocks 88 and 90. The bars 84 and 86 support between them cutters 92, in parallel relationship, and spaced from one another lengthwise of the bars 84 and 86. Each cutter 92 comprises a circular cross-section shaft 94 rotatably mounted in the bars 84 and 86 and about which extends radially at least one circular cable insulation slitting blade 96 formed integrally with the shaft 94. As shown in Figure 2 one of the cutters 92 has two blades 96 and the others, only one such blade 96, all the blades 96 being spaced from one another transversely of the bars 84 and 86. The insert 82 is retained in the channel 81 by means of screws 98 so that it can be readily exchanged for another and similar insert (not shown) provided with a different arrangement of cutters 92.

In order to prepare the tool for operation, the rails 42 and 44 are pivoted, against the action of the springs 76, to an open, loading position remote from the base 12. In this position, the rails 42 and 44 extend at an angle of approximately 45 degrees with respect to the base 12, the pins 68 and 70 engaging in the detent portions 75 of the respective slots 60 and 62 to retain the rails 42 and 44 releasably in their open position. A cutting block insert 22 having a base surface 24 of the desired width is then mounted in the base 12 of the tool, a module 82 provided with a desired number of cutters 92 having a desired number of slitting blades 92 arranged in a desired spaced relationship axially of the shafts 94, is secured in the channel 81 of the slide block 78 by means of the screws 98 and the stop blocks 52 and 54 are adjusted to a desired position longitudinally of the rails 42 and 44.

With the pad 34 in its raised position, a piece of multi-conductor flat flexible cable 100 (best seen in Figure 6) comprising conductors 102 embedded or laminated in a common insulating sheath 104, is then laid on the base cutting surface 24 in the channel 25, with an end of the cable 100 in engagement with the base 30 which thereby acts as a cable stop axially to position the cable 100. The handle 31 is then moved with respect to the frame 38 to cause the cable 100 to be gripped between the pad 34 and the surface 24, and the frame 38 is closed by lowering it by means of the handle 80, onto the base 12, with the slide block 40 in engagement with the stop blocks 52 and 54. During this closure movement, the blades 96 engage the cable 100, under the action of the springs 76, with sufficient force to penetrate through the cable sheath 104 and the pins 68 and 70 releasably engage in the detent portions 77 of the slots 60 and 62, releasably to retain the frame 38 in its closed, operative position. The slide block 40 is then moved in a direction towards, and up to the rail cap 50 to cause each blade 96 to slit the cable 100 between an adjacent pair of its conductors 102. The handle 31 is then moved to release the cable 100, the frame 38 is opened, and the cable 100 is removed from the tool, after which the slit end portion of the cable i.e. that portion which was disposed between the blocks 52 and the base 30, is severed from the remainder of the cable.

The cable clamping operation is performed by moving the handle 31 towards the frame 38 to bring the pad 34 into contact with the cable 100 and then moving the handle 31 away from the frame 38 to clamp the cable between the pad 34 and the surface 24, the handle 31 extending substantially vertically in this position.

The length of each slit formed in the cable 100 is determined by the setting of the stop blocks 52 and 54 in relation to the position longitudinally of the frame 38, of the individual blade 96 that makes the slit. The conductors 102 may be separated individually or in groups by appropriately selecting the relative positions of the blades 96 axially of the shafts 92. Since, as mentioned above, the module 82 is readily exchangeable, the cable slitting pattern can easily and rapidly be selected. The provision of the clamp assembly 14 ensures that the cable 100 cannot move relative to the cutting surface 24, so as to falsify the cable slitting pattern. By virtue of the stop blocks 52 and 54 the slits can be started at accurately predetermined positions lengthwise of the cable 100. The cutting block insert 22 is also readily exchangeable to allow for the processing of cables of different widths.

## Claims

1. A slitting tool for separating the conductors of a multi-conductor, flat, flexible, insulated cable (100) into individual conductors (102) or groups of conductors (102), the tool comprising a cutting base surface (24) for receiving the cable (100), a cable cutter assembly (16) having cable insulation slitting blades (96), spaced from one another transversely of the slitting direction and means (44, 58) for moving the cutter assembly (16) relatively to the cutting base surface (24) between an open position to permit the insertion of the cable (100) there between to an extent limited by a stop (30), and a closed position to engage the slitting blades (96) in the insulation of the cable (100) when such is positioned between the base surface (24) and the cutter assembly (16); characterised in that the base surface (24), which is elongate in the direction of the cable (100) to be received thereon, is provided at one end with the stop (30) adjacent to which is a clamp (34) for securing the cable (100) against the base surface (24), the cutter assembly (16) comprising a slide block (40) mounted for movement longitudinally of the base surface (24) and carrying a module (82); and in that the slitting blades (96), which are carried in the module (82) which is exchangeably secured to the slide block (40), are mounted in spaced relationship both longitudinally and transversely of the base surface (24).

2. A tool according to Claim 1, characterised in that the module (82) is in the form of a frame comprising spaced cutter support bars (84 and 86) extending in the longitudinal direction of the base surface (24), the slitting blades (96) being supported by shafts (92) mounted in the support bars (84 and 86), the shafts (92) being spaced from one another axially along the support bars (84 and 86).

3. A tool according to Claim 2, characterised in that the module (82) is releasably secured in a channel (81) in the slide block (40), the channel (81) opening towards the base surface (24).

4. A tool according to any one of Claims 1, 2 or 3, characterised in that the slide block (40) is movable along rails (42 and 44) on which are provided stops (52 and 54) which are adjustable longitudinally of the rails (42 and 44) to limit movement of the slide block (40) towards the clamp (34)

5. A tool according to any one of the preceding claims, characterised in that the base surface (24) is constituted by the bottom of a channel (25) formed in an insert removably positioned in a tool base (12).

6. A tool according to any one of the preceding claims, characterised by resilient means (76) acting between the base surface (24) and the cutter assembly (16) to urge the latter towards the closed position so as to urge the blades (96) into the insulation (104) of the cable (100).

7. A tool according to any one of Claims 1 to 3, characterised in that the base surface (24) is carried by a tool base (12) to which are connected a pair of rails (42 and 44) along which the slide block (40) is movable, the rails (42 and 44) being pivotally connected to the tool base (12) by means of hinge members (56 and 58) having slots (60 and 62) in which are slidably engaged, pins (68 and 70) on the rails (42 and 44), the slots (60 and 62) having at their ends, detent portions (75 and 77) to receive the pins (68 and 70), releasably to secure the rails (42 and 44) in a first position in which the blades (96) are remote from the base surface (24) and a second position in which the blades (96) engage in the insulation (104) of the cable (100) when such is positioned on the base surface (24).

8. A tool according to Claim 7, characterised by extension springs (76) each secured at one end to the tool base (12) and at the other to one of the hinge members (56 and 58) to urge the rails (42 and 44) towards their closed position.

9. A tool according to any one of the preceding claims, characterised in that the clamp (34) is movable towards and away from the base surface (24) by means of a clamp assembly (14) mounted on a base (30) which constitutes the stop.

## Patentansprüche

1. Schneidwerkzeug zur Trennung der Leiter eines flachen, flexiblen, isolierten Mehrleiterkabels (100) in einzelne Leiter (102) oder in Gruppen von Leitern (102), mit einer Schneidbasisoberfläche (24) zur Aufnahme des Kabels (100), einer Kabelschneidelementeinheit (16), welche Kabelisolationsschneidklingen (96) aufweist, die quer zur Schneidrichtung zueinander beabstandet sind, und Einrichtungen (44, 58) zur Bewegung der Schneidelementeinheit (16) relativ zur Schneidbasisoberfläche (24) zwischen einer offenen Stellung, und das Einsetzen des Kabels (100) dazwischen in einem durch einen Anschlag (30) begrenzten Ausmaß zu gestatten und einer geschlossenen Position zum Eingriff der Schneidklingen (96) in die Isolation des Kabels (100), wenn dieses zwischen der Basisoberfläche (24) und der Schneidelementeinheit (16) positioniert ist, dadurch gekennzeichnet, daß die Basisoberfläche (24), die in Richtung des darauf aufzunehmenden Kabels (100) langgestreckt ist, an einem Ende mit dem Anschlag (30) versehen ist, in dessen Nähe eine Klemme (34) zur Festlegung des Kabels (100) gegen die Basisoberfläche (24) angeordnet ist, daß die Schneidelementeinheit (16) einen Schlittenblock (40) umfaßt, der zur Bewegung in Längsrichtung der Basisoberfläche (24) montiert ist und ein Modul (82) trägt, und daß die Schneidklingen (96), die in dem Modul (82) getragen sind, das austauschbar an dem Schlittenblock (40) befestigt ist, in beabstandeter Beziehung montiert sind, und zwar sowohl in Längsrichtung als auch quer zur Basisoberfläche (24).

2. Werkzeug nach Anspruch 1, dadurch gekennzeichnet, daß das Modul (82) die Form eines Rahmens aufweist, der beabstandete Schneidelementtragstangen (84 und 86) umfaßt, welche sich in Längsrichtung der Basisoberfläche (24) erstrecken, daß die Schneidklingen (96) durch Wellen (92) getragen sind, die in den Tragstangen (84 und 86) montiert sind, und daß die Wellen (92) axial entlang der Tragstangen (84 und 86) im Abstand zueinander angeordnet sind.

3. Werkzeug nach Anspruch 2, dadurch gekennzeichnet, daß das Modul (82) lösbar in einem Kanal (81) in dem Schlittenblock (40) befestigt ist, und daß sich der Kanal (81) zur Basisoberfläche (24) hin öffnet.

4. Werkzeug nach einem der Ansprüche 1, 2 oder 3, dadurch gekennzeichnet, daß der Schlittenblock (40) entlang Schienen (42 und 44) bewegbar ist, auf denen Anschläge (52 und 54) vorgesehen sind, die in Längsrichtung der Schienen (42 und 44) einstellbar sind, um die Bewegung des Schlittenblocks (40) zur Klemme (34) hin zu begrenzen.

5. Werkzeug nach einem der vorhergehenden Ansprüche, dadurch gekennzeichnet, daß die Basisoberfläche (24) durch den Boden eines Kanals (25) gebildet ist, der in einem entfernbar in einer Werkzeugbasis (12) positionierten Einsatz geformt ist.

6. Werkzeug nach einem der vorhergehenden Ansprüche, dadurch gekennzeichnet, daß elastische Einrichtungen (76) zwischen der Basisoberfläche (24) und der Schneidelementeinheit (16) wirken, um die letztere in die geschlossene Stellung zu drücken, so daß die Klingen (96) in die Isolation (104) des Kabels (100) hineingedrückt werden.

7. Werkzeug nach einem der Ansprüche 1 bis 3, dadurch gekennzeichnet, daß die Basisoberfläche (24) von einer Werkzeugbasis (12) getragen ist, mit der ein Paar von Schienen (42 und 44) verbunden sind, entlang der der Schlittenblock (40) bewegbar ist, daß die Schienen (42 und 44) schwenkbar mit der Werkzeugbasis (12) mittels Scharnierelementen (56 und 58) verbunden sind, welche Schlitze (60 und 62) aufweisen, in denen gleitend Stifte (68 und 70) auf den Schienen (42 und 44) im Eingriff stehen, daß die Schlitze (60 und 62) an ihren Enden Arretierabschnitte (75 und 77) aufweisen, um die Stifte (68 und 70) lösbar aufzunehmen, so daß die Schienen (42 und 44) in einer ersten Position festgelegt werden, in welcher die Klingen (96) von der Basisoberfläche (24) entfernt ist, sowie in einer zweiten Position, in welcher die Klingen (96) mit der Isolation (104) des Kabels (100) in Eingriff treten, wenn dieses auf der Basisoberfläche (24) positioniert ist.

8. Werkzeug nach Anspruch 7, dadurch gekennzeichnet, daß Dehnungsfedern (76) jeweils mit einem Ende an der Werkzeugbasis (12) befestigt sind und mit dem anderen Ende an einem der Scharnierelemente (56 und 58), um die Schienen (42 und 44) in ihre geschlossene Stellung zu drücken.

9. Werkzeug nach einem der vorhergehenden Ansprüche, dadurch gekennzeichnet, daß die Klemme (34) zur Basisoberfläche (24) hin und von dieser weg bewegbar ist und zwar mittels einer Klemmeneinheit (14), die auf einer Basis (30) montiert ist, welche den Anschlag darstellt.

## Revendications

1. Outil à refendre pour séparer les conducteurs d'un câble plat, flexible et isolé (100), à conducteurs multiples, en conducteurs individuels (102) ou groupes de conducteurs (102), l'outil comprenant une surface de base de coupe (24) pour recevoir le câble (100), un ensemble (16) à couteau de câble ayant des lames (96) à refendre l'isolation, espacées les unes des autres transversalement à la direction de refendage, et des moyens (44, 58) pour déplacer l'ensemble à couteau (16) par rapport à la surface de base de coupe (24) entre une position d'ouverture pour permettre l'insertion du câble (100) entre l'ensemble à couteau et la surface de base, sur une distance limitée par une butée (30), et une position de fermeture pour introduire les lames à refendre (96) dans l'isolation du câble (100) lorsque celui-ci est positionné entre la surface de base (24) et l'ensemble à couteau (16); caractérisé en ce que la surface de base (24), qui est allongée dans la direction du câble (100) qu'elle doit recevoir, comporte, à une première extrémité, la butée (30) à proximité immédiate de laquelle se trouve une bride (34) destinée à fixer le câble (100) contre la surface de base (24), l'ensemble à couteau (16) comprenant un bloc coulissant (40) monté pour pouvoir se déplacer longitudinalement à la surface de base (24) et portant un module (82); et en ce que les lames à refendre (96), qui sont portées dans le module (82) qui est fixé de façon interchangeable au bloc coulissant (40), sont montées de façon à être espacées à la fois longitudinalement et transversalement à la surface de base (24).

2. Outil selon la revendication 1, caractérisé en ce que le module (82) se présente sous la forme d'un bâti comprenant des barres espacées (84 et 86) de support de couteau s'étendant dans la direction longitudinale de la surface de base (24), les lames à refendre (96) étant supportées par des axes (92) montés dans les barres de support (84 et 86), les axes (92) étant espacés les uns des autres axialement le long des barres de support (84 et 86).

3. Outil selon la revendication 2, caractérisé en ce que le module (82) est fixé de façon amovible dans une rainure (81) du bloc coulis-

sant (40), la rainure (81) s'ouvrant vers la surface de base (24).

4. Outil selon l'une quelconque des revendications 1, 2 ou 3, caractérisé en ce que le bloc coulissant (40) est mobile le long de rails (42 et 44) sur lesquels sont prévues des butées (52 et 54) qui sont réglables longitudinalement aux rails (42 et 44) pour limiter le mouvement du bloc coulissant (40) vers la bride (34).

5. Outil selon l'une quelconque des revendications précédentes, caractérisé en ce que la surface de base (24) est constituée par le fond d'une rainure (25) formée dans un élément rapporté, positionné de façon amovible dans une base d'outil (12).

6. Outil selon l'une quelconque des revendications précédentes, caractérisé par des moyens élastiques (76) agissant entre la surface de base (24) et l'ensemble à couteau (16) pour tendre à déplacer ces derniers vers la position de fermeture afin de tendre à déplacer les lames (96) vers l'intérieur de l'isolation (104) du câble 100.

7. Outil selon l'une quelconque des revendications 1 à 3, caractérisé en ce que la surface de base (24) est portée par une base d'outil (12) à laquelle sont reliés deux rails (42 et 44) le long desquels le bloc coulissant (40) est mobile, les rails (42 et 44) étant reliés de façon à pouvoir pivoter à la base (12) de l'outil au moyen d'éléments de charnières (56 et 58) ayant des rainures (60 et 62) dans lesquelles peuvent coulisser des axes (68 et 70) portés par les rails (42 et 44), les rainures (60 et 62) ayant, à leurs extrémités, des parties d'encliquetage (75 et 77) destinées à recevoir les axes (68 et 70) pour maintenir de façon amovible les rails (42 et 44) dans une première positon dans laquelle les lames (96) sont éloignées de la surface de base (24) et dans une seconde position dans laquelle les lames (96) pénètrent dans l'isolation (104) du câble (100) lorsque celui-ci est positionné sur la surface de base (24).

8. Outil selon la revendication 7, caractérisé par des ressorts (76) de traction fixés chacun, par une extrémité, à la base (12) de l'outil et, par l'autre extrémité l'un des éléments de charnières (56 et 58) pour tendre à déplacer les rails (42 et 44) vers leur position de fermeture.

9. Outil selon l'une quelconque des revendications précédentes, caractérisé en ce que la bride (34) peut être rapprochée et éloignée de la surface de base (24) au moyen d'un ensemble à bride (14) monté sur une base (30) qui constitue la butée.

FIG.1.

80  98  40  78  81  84  FIG.2.  92  90  82  86  88  96  94

100  102  104  FIG.6.

FIG.3.

FIG.4.

FIG.5.